# EUROPEAN PATENT APPLICATION

(11) **EP 4 282 928 A1**
(43) Date of publication of application: **29.11.2023**
(21) Application number: 23174905.2
(22) Date of filing: 23.05.2023
(51) Int. Cl.: C09J 7/38

(54) **METHOD OF PRODUCING DOUBLE-SIDED PRESSURE-SENSITIVE ADHESIVE SHEET AND DOUBLE-SIDED PRESSURE-SENSITIVE ADHESIVE SHEET**

(30) Priority: 24.05.2022 JP 2022084264
(71) Applicant: Nitto Denko Corporation, Ibaraki-shi Osaka 567-8680 (JP)
(72) Inventor: YAMAMOTO, Shuhei, Osaka, 567-8680 (JP); SAWAMURA, Amane, Osaka, 567-8680 (JP)
(74) Representative: Müller-Boré & Partner Patentanwälte PartG mbB

(57) **Abstract**

Provided are a method of producing a double-sided pressure-sensitive adhesive sheet suitable for producing a thin double-sided pressure-sensitive adhesive sheet having a good appearance while reducing the environmental load, and a double-sided pressure-sensitive adhesive sheet.

A method of producing a double-sided pressure-sensitive adhesive sheet includes a step of applying a water-dispersed pressure-sensitive adhesive composition onto a release liner 11 to form a coating film 20a, a step of drying the coating film 20a by heating to form a pressure-sensitive adhesive layer 21, a step of bonding a first surface 31 of a substrate film 30 to an exposed surface of the pressure-sensitive adhesive layer 21, a step of applying a water-dispersed pressure-sensitive adhesive composition onto a second surface 32 of the substrate film 30 to form a coating film 20b, and a step of drying the coating film 20b by heating to form a pressure-sensitive adhesive layer 22. A double-sided pressure-sensitive adhesive sheet X includes the substrate film 30 with a thickness of 12 µm or less, the pressure-sensitive adhesive layer 21 on the first surface 31 formed from the water-dispersed pressure-sensitive adhesive composition, the pressure-sensitive adhesive layer 22 on the second surface 32 formed from the water-dispersed pressure-sensitive adhesive composition, and the release liner 11 in releasable contact with an adhesive surface 21a of the pressure-sensitive adhesive layer 21.

## Description

The present invention relates to a method of producing a double-sided pressure-sensitive adhesive sheet and a double-sided pressure-sensitive adhesive sheet.

A double-sided pressure-sensitive adhesive sheet includes, for example, a substrate film, a first pressure-sensitive adhesive layer on a one-side surface of the substrate film, and a second pressure-sensitive adhesive layer on the other-side surface of the substrate film. The double-sided pressure-sensitive adhesive sheet is, for example, used as a bonding material in a device such as a display panel. Such a double-sided pressure-sensitive adhesive sheet has conventionally been produced, for example, as follows.

First, a first pressure-sensitive adhesive layer is formed on a first release liner, and a second pressure-sensitive adhesive layer is formed on a second release liner. For the formation of each pressure-sensitive adhesive layer on the release liner, first, a pressure-sensitive adhesive composition is applied onto the release liner with a coater to form a coating film (applying step). The release liner is a plastic film with a surface having undergone a release treatment. The pressure-sensitive adhesive composition is prepared, for example, by mixing a base polymer, another component, and an organic solvent. In the applying step, a metal member, such as a die or a blade, of the coater scrapes the release liner. The release liner is required to have a thickness large enough to avert the tear, warp, and crease due to the scraping. The substrate to which the pressure-sensitive adhesive composition is to be applied is required to have a thickness of, for example, 35 µm or more, where the substrate is a release liner or a substrate film mentioned hereinafter. After the applying step, the coating film on the release liner is dried by heating, thereby forming a pressure-sensitive adhesive layer.

Next, the first pressure-sensitive adhesive layer on the first release liner is bonded to the one-side surface of the substrate film (first transfer step). Next, the second pressure-sensitive adhesive layer on the second release liner is bonded to the other-side surface of the substrate film (second transfer step). In this manner, the double-sided pressure-sensitive adhesive sheet is produced.

In the double-sided pressure-sensitive adhesive sheet produced as described above, each of the pressure-sensitive adhesive layers is covered with the release liner. The release liners are removed when the double-sided pressure-sensitive adhesive sheet is used. The removed release liners are discarded.

The techniques related to the double-sided pressure-sensitive adhesive sheet described above are disclosed in, for example, Patent Document 1.

### Citation List

### Patent Document

Patent Document 1: Japanese Unexamined Patent Publication No. 2021-175796

In view of the reduction in plastic waste, forming the pressure-sensitive adhesive layer directly on the substrate film (referred herein as the first method) may be considered in place of forming the pressure-sensitive adhesive layer on the release liner and then transferring the formed pressure-sensitive adhesive layer onto the substrate film in the production of the double-sided pressure-sensitive adhesive sheet. The first method is carried out, for example, as follows.

First, a pressure-sensitive adhesive composition is applied onto the one-side surface of a substrate film with a coater to form a coating film (first applying step). Next, the coating film on the substrate film is dried by heating to form a first pressure-sensitive adhesive layer. Next, a first release liner is bonded to the pressure-sensitive adhesive layer on the substrate film. Next, a pressure-sensitive adhesive composition is applied onto the other-side surface of the substrate film with a coater to form a coating film (second applying step). Next, the coating film on the substrate film is dried by heating to form a second pressure-sensitive adhesive layer. Next, a second release liner is bonded to the second pressure-sensitive adhesive layer on the substrate film. Using such release liners thinner than the release liners used in the above-described conventional method as the first and second release liners allows for the reduction in the plastic waste caused by the production and use of the double-sided pressure-sensitive adhesive sheet. The reduction in the plastic waste helps the reduction in environmental load.

Meanwhile, the double-sided pressure-sensitive adhesive sheet requires a thinness depending on the purpose. For example, there is strong demand for thinning down the double-sided pressure-sensitive adhesive sheets for display panels. In order to thin the double-sided pressure-sensitive adhesive sheet while allowing the pressure-sensitive adhesive layer to have a thickness required for securing the good adhesive properties of the layer, it is necessary to use a thin substrate film. However, the first method requires a substrate film to have a thickness of, for example, 35 µm or more to avert the tear, warp, and crease of the substrate film in the first applying step. For that reason, the first method is not suitable for thinning the double-sided pressure-sensitive adhesive sheet. In light of the foregoing, the following method (referred herein as the second method) may be considered.

First, a pressure-sensitive adhesive composition (containing a base polymer and an organic solvent) is applied onto a first release liner with a coater to form a coating film (first applying step). Next, the coating film on the first release liner is dried by heating to form a first pressure-sensitive adhesive layer (first drying step). Next, the first pressure-sensitive adhesive layer on the first release liner is bonded to the one-side surface of a substrate film. Next, a pressure-sensitive adhesive composition is applied onto the other-side surface of the substrate film to form a coating film (second applying step). Next, the coating film on the substrate film is dried by heating to form a second pressure-sensitive adhesive layer (second drying step). Next, a second release liner is bonded to the second pressure-sensitive adhesive layer on the substrate film.

In the second method described above, the substrate film of the second applying step is reinforced in effect by the first release liner and pressure-sensitive adhesive layer disposed on the one-side surface of the substrate film. This reinforcement allows for the use of a thin plastic film with a thickness of less than, for example, 35 µm as the substrate film. Thus, the second method is more suitable for thinning the double-sided pressure-sensitive adhesive sheet than the first method. In addition, the second method allows for use of a release liner thinner than the one used in the conventional method described above as the second release liner, and thus for reduction in the plastic waste caused by the production and use of the double-sided pressure-sensitive adhesive sheet. The second method, however, causes a defect in the first pressure-sensitive adhesive layer. The details of the defect are as follows.

The first pressure-sensitive adhesive layer is formed from the pressure-sensitive adhesive composition containing an organic solvent, and thus a small amount of the organic solvent remains in the first pressure-sensitive adhesive layer after the first drying step. In the second drying step, the first pressure-sensitive adhesive layer containing the remaining solvent is heated in a state of being covered with the substrate film and the first release liner. This heating causes a defect due to the vaporization of the remaining organic solvent. Specifically, the organic solvent remaining in the first pressure-sensitive adhesive layer rapidly vaporizes by the heating in the second drying step and locally forms into air bubbles between the pressure-sensitive adhesive layer and the release liner. The air bubbles form cavities (air bubble craters) on the surface of the pressure-sensitive adhesive layer. These air bubbles and craters are the defects in the double-sided pressure-sensitive adhesive sheet, and cause the double-sided pressure-sensitive adhesive sheet deficient in appearance or in thickness, which is not preferable.

The present invention provides a method of producing a double-sided pressure-sensitive adhesive sheet suitable for producing a thin double-sided pressure-sensitive adhesive sheet having a good appearance while reducing the environmental load, and further provides a double-sided pressure-sensitive adhesive sheet.

The present invention [1] includes a method of producing a double-sided pressure-sensitive adhesive sheet, the method including: a first applying step of applying a first water-dispersed pressure-sensitive adhesive composition to a release liner to form a first coating film; a first drying step of drying the first coating film by heating to form a first pressure-sensitive adhesive layer; a bonding step of bonding a first surface of a substrate film to an exposed surface of the first pressure-sensitive adhesive layer on the release liner, the substrate film having the first surface and a second surface opposite the first surface; a second applying step of applying a second water-dispersed pressure-sensitive adhesive composition to the second surface of the substrate film to form a second coating film; and a second drying step of drying the second coating film by heating to form a second pressure-sensitive adhesive layer.

The present invention [2] includes the method described in the above-described [1], further including a step of bonding a release liner to an exposed surface of the second pressure-sensitive adhesive layer on the substrate film.

The present invention [3] includes a double-sided pressure-sensitive adhesive sheet including: a substrate film having a first surface and a second surface opposite the first surface, the substrate film having a thickness of 12 µm or less; a first pressure-sensitive adhesive layer disposed on the first surface, having a first adhesive surface opposite the substrate film, and formed from a first water-dispersed pressure-sensitive adhesive composition; a second pressure-sensitive adhesive layer disposed on the second surface, having a second adhesive surface opposite the substrate film, and formed from a second water-dispersed pressure-sensitive adhesive composition; and a release liner in releasable contact with the first adhesive surface.

The present invention [4] includes the double-sided pressure-sensitive adhesive sheet described in the above-described [3], wherein the second pressure-sensitive adhesive layer is formed from a coating film of the second water-dispersed pressure-sensitive adhesive composition applied to the substrate film.

The present invention [5] includes the double-sided pressure-sensitive adhesive sheet described in the above-described [3] or [4], wherein the release liner has a thickness of 35 µm or more.

The present invention [6] includes the double-sided pressure-sensitive adhesive sheet described in any one of the above-described [3] to [5], further including a release liner in releasable contact with the second adhesive surface, the release liner having a thickness of 25 µm or less.

The present invention [7] includes the double-sided pressure-sensitive adhesive sheet described in any one of the above-described [3] to [6], wherein the substrate film includes an anchoring layer forming the first surface and/or an anchoring layer forming the second surface.

During the second applying step in the method of producing the double-sided pressure-sensitive adhesive sheet of the present invention, the substrate film is reinforced in effect by the release liner and first pressure-sensitive adhesive layer disposed on the one-side surface of the substrate film. In the second applying step, a second water-dispersed pressure-sensitive adhesive composition is applied onto a second surface of the substrate film, which is reinforced as described above, with a coater. Thus, the present production method is suitable for using a thin substrate film.

Further, the present production method allows for the production of a double-sided pressure-sensitive adhesive sheet without a release liner covering the adhesive surface of the second pressure-sensitive adhesive layer, namely, the production of a double-sided pressure-sensitive adhesive sheet with a release liner on one side. Thus, the present production method is suitable for reducing the plastic waste caused by the production and use of the double-sided pressure-sensitive adhesive sheet, and thus for reducing the environmental load.

Furthermore, the present production method uses the first and second water-dispersed pressure-sensitive adhesive compositions as the materials of the first and second pressure-sensitive adhesive layers, respectively. Thus, the present production method is more suitable for reducing the environmental load than the above-described conventional production method which uses a pressure-sensitive adhesive composition containing an organic solvent.

Furthermore, substantially no organic solvent remains in the first pressure-sensitive adhesive layer formed from the first water-dispersed pressure-sensitive adhesive composition. Thus, the present production method can prevent or suppress the occurrence of a defect caused by the vaporization of the remaining organic solvent in the first pressure-sensitive adhesive layer being heated together with the second coating film in the second drying step. In other words, in the first pressure-sensitive adhesive layer formed from a water-dispersed pressure-sensitive adhesive composition, the water is less likely to rapidly vaporize than the organic solvent, and thus the occurrence of the defect is prevented or suppressed. The prevention or suppression of the occurrence of the defect in the first pressure-sensitive adhesive layer is suitable for ensuring good appearance of the double-sided pressure-sensitive adhesive sheet.

Accordingly, the present production method is suitable for producing a thin double-sided pressure-sensitive adhesive sheet having a good appearance while reducing the environmental load.

The double-sided pressure-sensitive adhesive sheet of the present invention can be produced by the production method described above. Thus, the double-sided pressure-sensitive adhesive sheet is suitable for being produced as a thin double-sided pressure-sensitive adhesive sheet having a good appearance while reducing the environmental load.
FIGS. 1A to 1E illustrate one embodiment of a method for producing the double-sided pressure-sensitive adhesive sheet of the present invention. FIG. 1A illustrates a first applying step. FIG. 1B illustrates a first drying step. FIG. 1C illustrates a bonding step. FIG. 1D illustrates a second applying step. FIG. 1E illustrates a second drying step.
FIG. 2 illustrates a case in which a release liner is bonded to the second pressure-sensitive adhesive layer after the second drying step.

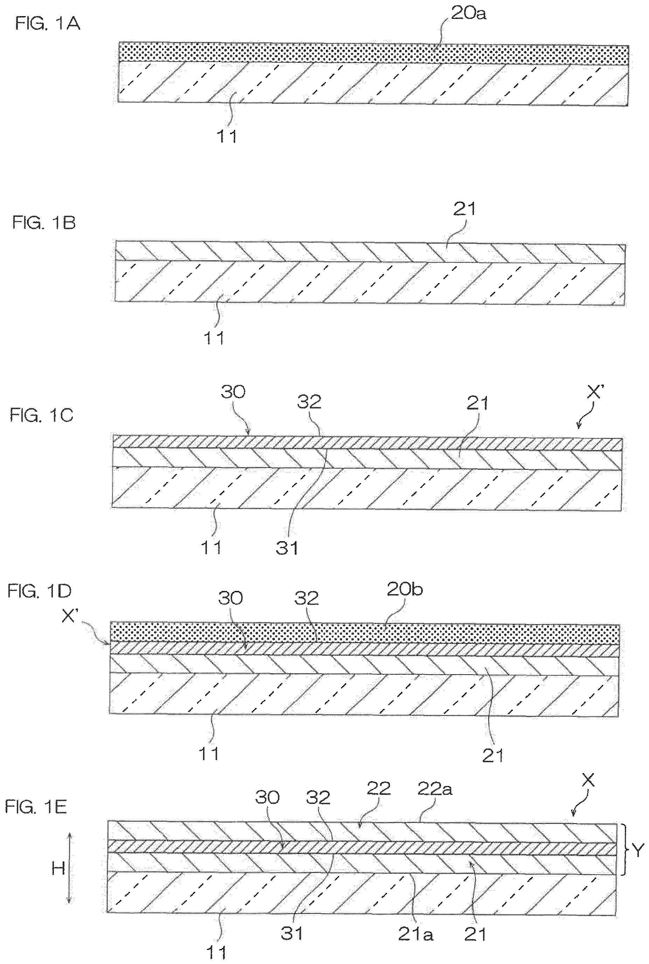

FIGS. 1A to 1E illustrate one embodiment of a method of producing the double-sided pressure-sensitive adhesive sheet of the present invention. This production method includes a first applying step, a first drying step, a bonding step, a second applying step, and a second drying step. This production method is a method of producing a double-sided pressure-sensitive adhesive sheet X illustrated in FIG. 1E and detailed below. The double-sided pressure-sensitive adhesive sheet X is a double-sided pressure-sensitive adhesive sheet with a release liner attached to the single side, and includes a double-sided pressure-sensitive adhesive sheet Y.

In the first applying step, as illustrated in FIG. 1A, a coating film 20a is formed on a release liner 11. Specifically, a first water-dispersed pressure-sensitive adhesive composition is applied onto the release liner 11 with a coater to form the coating film 20a. Examples of the method of applying the composition include roll coating, kiss roll coating, gravure coating, reverse roll coating, roll brush coating, bar coating, knife coating, air knife coating, curtain coating, lip coating, and die coating. As the application method, die coating is preferable. The coater to be used in this step depends on the application method.

The release liner 11 is an element that covers and protects a pressure-sensitive adhesive sheet. The release liner 11 is a plastic film having flexibility. Examples of the plastic film include polyester films, such as a polyethylene terephthalate film, polyethylene films, and polypropylene films. The surface of the coating film 20a side of the release liner 11 is preferably subjected to release treatment. Examples of the release treatment include silicone release treatment and fluorine release treatment.

In view of the suppression of the tear, warp, and crease of the release liner 11 in this step, the release liner 11 has a thickness T1 of preferably 35 µm or more, more preferably 38 µm or more (in the applying step, a metal member, such as a die or blade, of the coater scrapes the release liner 11). The thickness T1 of the release liner 11 is preferably 50 µm or less, more preferably 45 µm or less in view of the reduction in the plastic waste caused by the production and use of the double-sided pressure-sensitive adhesive sheet.

The first water-dispersed pressure-sensitive adhesive composition is an aqueous emulsion containing a water-dispersible polymer and water. Examples of the water-dispersible polymer include water-dispersible acrylic polymers, water-dispersible urethane-based polymers, and water-dispersible polyester-based polymers, and a water-dispersible acrylic polymer is preferably used. The acrylic polymer is a polymer of a monomer component containing alkyl (meth)acrylate in a ratio of 50% by mass or more. Used herein, the "(meth)acrylate" refers to acrylate and/or methacrylate.

Examples of the alkyl (meth)acrylate include an alkyl (meth)acrylate having a straight-chain or branched alkyl group having 1 to 20 carbon atom(s). Examples of the alkyl (meth)acrylate include methyl (meth)acrylate, ethyl (meth)acrylate, propyl (meth)acrylate, n-butyl (meth)acrylate, isopropyl (meth)acrylate, isobutyl (meth)acrylate, s-butyl (meth)acrylate, t-butyl (meth)acrylate, pentyl (meth)acrylate, isopentyl (meth)acrylate, neopentyl (meth)acrylate, hexyl (meth)acrylate, heptyl (meth)acrylate, 2-ethylhexyl (meth)acrylate, octyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, isotridecyl (meth)acrylate, tetradecyl (meth)acrylate, and isotetradecyl (meth)acrylate. The alkyl (meth)acrylates may be used singly or in combination of two or more. As the alkyl (meth)acrylate, preferably, alkyl acrylate having an alkyl group having 1 to 12 carbon atom(s) is used, more preferably, methyl acrylate and alkyl acrylate having an alkyl group having 2 to 8 carbon atoms are used, even more preferably, methyl acrylate and 2-ethylhexyl acrylate are used.

The ratio of the alkyl (meth)acrylate in the monomer component is preferably 70% by mass or more, more preferably 80% by mass or more, even more preferably 90% by mass or more, particularly preferably 95% by mass or more, and preferably 99.5% by mass or less, more preferably 99% by mass or less in view of appropriate development of the fundamental properties, such as adhesive properties, of the pressure-sensitive adhesive layer formed from the first water-dispersed pressure-sensitive adhesive composition.

The monomer component may contain a copolymerizable monomer that can be copolymerized with alkyl (meth)acrylate. Examples of the copolymerizable monomer include polar group-containing monomers. Examples of the polar group-containing monomer include a carboxy group-containing monomer, a hydroxy group-containing monomer, a monomer having a nitrogen atom-containing ring, and a silanol group-containing monomer. The polar group-containing monomer helps to modify the quality of the acrylic polymer, for example, to secure the cohesive force of the acrylic polymer. The copolymerizable monomers may be used singly or in combination of two or more.

Examples of the carboxy group-containing monomer include acrylic acid, methacrylic acid, 2-carboxyethyl (meth)acrylate, carboxypentyl (meth)acrylate, itaconic acid, maleic acid, fumaric acid, and crotonic acid. The monomer component preferably includes a carboxy group-containing monomer, more preferably includes acrylic acid or methacrylic acid, particularly preferably includes a combination of acrylic acid and methacrylic acid in view of securing the adhesive properties of the pressure-sensitive adhesive layer formed from the first water-dispersed pressure-sensitive adhesive composition.

The ratio of the carboxy group-containing monomer in the monomer component is preferably 0.5% by mass or more, more preferably 1% by mass or more, even more preferably 1.5% by mass or more in view of securing the cohesive force of the pressure-sensitive adhesive layer formed from the first water-dispersed pressure-sensitive adhesive composition. The ratio of the carboxy group-containing monomer in the monomer component is preferably 8% by mass or less, more preferably 5% by mass or less, even more preferably 3% by mass or less in view of the prevention of the corrosion of the adherend by acid.

Examples of the hydroxyl group-containing monomer include 2-hydroxyethyl (meth)acrylate, 2-hydroxypropyl (meth)acrylate, 2-hydroxybutyl (meth)acrylate, 3-hydroxypropyl (meth)acrylate, 4-hydroxybutyl (meth)acrylate, and 6-hydroxyhexyl (meth)acrylate.

Examples of the monomer having a nitrogen atom-containing ring include N-vinyl-2-pyrrolidones, N-methylvinylpyrrolidones, N-vinylpyridines, N-vinylpiperidones, N-vinylpyrimidines, N-vinylpiperazines, N-vinylpyrazines, and acryloyl morpholines.

Examples of the silanol group-containing monomer include 3-methacryloxypropyltrimethoxysilane and 3-acryloxypropyltrimethoxysilane.

The water-dispersible acrylic polymer is formed, for example, by emulsion polymerization of the above-described monomer component. In the emulsion polymerization, for example, first, a mixture containing a monomer component, an emulsifier, and water is stirred, thereby preparing a monomer emulsion. Next, a polymerization initiator is added to the monomer emulsion, thereby initiating a polymerization reaction. For the polymerization reaction, a chain transfer agent may be used in order to adjust the molecular weight of the acrylic polymer. The polymerization method may be dropwise polymerization or collective polymerization. The polymerization time is, for example, 0.5 to 10 hours. The polymerization temperature is, for example, 50°C to 80°C.

Examples of the emulsifier include anionic emulsifiers, nonionic emulsifiers, and radically polymerizable emulsifiers, i.e., reactive emulsifiers.

Examples of the anionic emulsifier include sodium polyoxyethylene lauryl sulfate, sodium lauryl sulfate, ammonium lauryl sulfate, sodium dodecyl benzene sulfonate, sodium polyoxyethylene alkyl ether sulfate, ammonium polyoxyethylene alkyl phenyl ether sulfate, sodium polyoxyethylene alkyl phenyl ether sulfate, and sodium polyoxyethylene alkyl sulfosuccinate.

Examples of the nonionic emulsifier include polyoxyethylene alkyl ether, polyoxyethylene alkyl phenyl ether, polyoxyethylene fatty acid ester, and polyoxyethylene polyoxypropylene block polymer.

Examples of the radically polymerizable emulsifier (reactive emulsifier) include an emulsifier in which a radically polymerizable functional group is introduced into the above-described anionic emulsifier or the above-described nonionic emulsifier. Examples of the radically polymerizable functional group include vinyl groups, propenyl groups, isopropenyl groups, vinyl ether groups, and allyl ether groups. Specifically, as the reactive emulsifier, ammonium-α-sulfonate-ω-1-(allyloxymethyl)alkyloxypolyoxyethylene is preferable. When a reactive emulsifier is used as the emulsifier, the water-dispersible acrylic polymer obtained by the emulsion polymerization includes a monomer unit derived from the reactive emulsifier. In other words, the emulsifier is incorporated into the acrylic polymer. Thus, when the pressure-sensitive adhesive layer formed from the first water-dispersed pressure-sensitive adhesive composition is bonded to an adherent, the contamination of the adherent by the emulsifier, which is a low molecular weight component, is suppressed.

The emulsifiers may be used alone or in combination of two or more. The blending amount of the emulsifier with respect to 100 parts by mass of the monomer component is, for example, 0.5 parts by mass or more, and, for example, 5 parts by mass or less.

Examples of the polymerization initiator include azo polymerization initiators and peroxide polymerization initiators. Examples of the azo polymerization initiator include 2,2'-azobis{2-[N-(2-carboxyethyl)amidino]propane}, 2,2'-azobisisobutyronitrile, 2,2'-azobis (2-amidinopropane)dihydrochloride, 2,2'-azobis[2-(5-methyl-2-imidazoline-2-yl)propane]dihydrochloride, and 2,2'-azobis (N,N'-dimethyleneisobutylamidine). Examples of the peroxide polymerization initiator include benzoyl peroxide, t-butyl hydroperoxide, and hydrogen peroxide. The polymerization initiators may be used alone or in combination of two or more. The blending ratio of the polymerization initiator with respect to 100 parts by mass of the monomer component is, for example, 0.01 parts by mass or more, and, for example, 2 parts by mass or less.

Examples of the chain transfer agent include glycidylmercaptan, mercaptoacetic acid, 2-mercaptoethanol, t-lauryl mercaptan, t-dodecanethiol, thioglycolic acid, 2-ethylhexyl thioglycolic acid, and 2,3-dimercapto-1-propanol. The chain transfer agents may be used alone or in combination of two or more. The blending ratio of the chain transfer agent with respect to 100 parts by mass of the monomer component is, for example, 0.001 parts by mass or more, and, 0.5 parts by mass or less.

By the emulsion polymerization described above, the water-dispersible acrylic polymer is prepared as a polymer emulsion, i.e., a water-dispersed solution in which a water-dispersible acrylic polymer is dispersed in water.

The weight average molecular weight (Mw) of the water-dispersible acrylic polymer is, for example, 100000 or more, preferably 300000 or more, and, for example, 5000000 or less, preferably 3000000 or less. The weight average molecular weight of the acrylic polymer is calculated in terms of polystyrene measured by gel permeation chromatography (GPC).

The glass transition temperature (Tg) of the water-dispersible acrylic polymer is, for example, 20°C or less, preferably 0°C or less. The glass transition temperature of the polymer is calculated, for example, using the Fox equation.

The first water-dispersed pressure-sensitive adhesive composition may contain another component other than the water-dispersible polymer and water. Examples of the other component include thickeners, leveling agents, tackifiers, silane coupling agents, preservatives, surfactants, cross-linking agents, and antistatic agents.

Examples of the thickener include carboxylic acid copolymer thickeners and polyacrylic acid thickeners.

The carboxylic acid copolymer thickener is an emulsion-type thickener made of a carboxylic acid copolymer. Examples of the carboxylic acid copolymer include a copolymer of a monomer component including a carboxy group-containing acrylic monomer. Examples of commercial products of the carboxylic acid copolymer thickener include "ARON B-300K", "ARON B-500", "ARON A-7055", and "ARON A-7075" manufactured by TOAGOSEI CO., LTD. Preferably, "ARON B-500" is used. The carboxylic acid copolymer thickeners may be used alone or in combination of two or more.

Examples of the polyacrylic acid thickener include polyacrylic acid (homopolymers of acrylic acid), sodium polyacrylate, and ammonium polyacrylate. Examples of commercial products of the polyacrylic acid thickener include "ARON A-10H" (polyacrylic acid), "ARON A-20L" (sodium polyacrylate), "ARON A-7100" (sodium polyacrylate), "ARON A-30" (ammonium polyacrylate), and "ARON A-7195" (ammonium polyacrylate) manufactured by TOAGOSEI CO., LTD. Preferably, "ARON A-10H" is used.

The ratio of the thickener in the solid content of the first water-dispersed pressure-sensitive adhesive composition is preferably 1% by mass or more, more preferably 1.4% by mass or more in view of ensuring a thickening of the first water-dispersed pressure-sensitive adhesive composition. The ratio of the thickener in the solid content of the first water-dispersed pressure-sensitive adhesive composition is preferably 3% by mass or less, more preferably 2.6% by mass or less in view of the prevention of an excessive thickening of the first water-dispersed pressure-sensitive adhesive composition. The solid content of the water-dispersed pressure-sensitive adhesive composition is the components other than the water in the water-dispersed pressure-sensitive adhesive composition. Specifically, the solid content is the mixture of the water-dispersible polymer and the other components blended as necessary, such as a thickener, a leveling agent, and a tackifier.

Examples of the leveling agent include "NEOCOL SW-C" (sodium dialkylsulfosuccinate manufactured by DKS Co., Ltd.), "NEOCOL P" (sodium dialkylsulfosuccinate manufactured by DKS Co., Ltd.), "SURFINOL 420" (acetylene glycol ethylene oxide surfactant manufactured by Nissin Chemical co., ltd.), and "PELEX OT-P" (sodium dialkylsulfosuccinate manufactured by Kao Corporation). Examples of the leveling agent further include "NOPCO WET 50" (sulfonic acid-based anionic surfactant), "SN-WET 126" (modified silicone/specially-treated polyether-based surfactant), "SN-WET FST2" (nonionic wetting agent of polyoxyalkyleneamine), "SN-WET S" (nonionic wetting agent of polyoxyalkyleneamine ether), and "SN-WET 125" (modified silicone-based surfactant), each of which is manufactured by SAN NOPCO LIMITED. The leveling agent may be used alone or in combination of two or more. In view of ensuring a good leveling property in the first water-dispersed pressure-sensitive adhesive composition, at least one selected from "NEOCOL SW-C", "NEOCOL P" and "PELEX OT-P" is preferably used as the leveling agent.

The blending ratio of the leveling agent to 100 parts by mass of the water-dispersible polymer is preferably 0.1 parts by mass or more, more preferably 0.5 parts by mass or more, even more preferably 0.8 parts by mass or more in view of the prevention of repellence of the first water-dispersed pressure-sensitive adhesive composition. Further, the blending ratio of the leveling agent is preferably 3 parts by mass or less, more preferably 2 parts by mass or less, even more preferably 1 part by mass or less in view of securing the good adhesive properties of the first water-dispersed pressure-sensitive adhesive composition.

Examples of the tackifier include various tackifier resins such as rosin-based resins, rosin derivative resins, petroleum-based resins, terpene-based resins, phenol-based resins, and ketone-based resins. The blending amount of the tackifier with respect to 100 parts by mass of the water-dispersible polymer is preferably 5 parts by mass or more, more preferably 15 parts by mass or more, even more preferably 20 parts by mass or more, particularly preferably 25 parts by mass or more, and, preferably 50 parts by mass or less, more preferably 45 parts by mass or less, even more preferably 40 parts by mass or less in view of the balance between the viscosity of the first water-dispersed pressure-sensitive adhesive composition and the adhesive properties of the pressure-sensitive adhesive layer formed from the first water-dispersed pressure-sensitive adhesive composition.

Examples of the silane coupling agent include 3-methacryloxypropyltrimethoxysilane, 3-methacryloxypropylmethyldimethoxysilane, 3-methacryloxypropylmethyldiethoxysilane, and 3-methacryloxypropyltriethoxysilane. Preferably, 3-methacryloxypropyltrimethoxysilane is used. The blending amount of the silane coupling agent with respect to 100 parts by mass of the water-dispersible polymer is, for example, 0.005 parts by mass or more, and, for example, 1 part by mass or less.

The first water-dispersed pressure-sensitive adhesive composition does not contain an organic solvent. Such a first water-dispersed pressure-sensitive adhesive composition is preferable in view of the reduction in environmental load.

The first water-dispersed pressure-sensitive adhesive composition may be prepared, for example, by adding each component to an emulsion polymerization solution of a water-dispersible polymer. Further, the solid content concentration of the first water-dispersed pressure-sensitive adhesive composition is adjusted by increasing or decreasing the water content of the first water-dispersed pressure-sensitive adhesive composition.

The solid content concentration of the first water-dispersed pressure-sensitive adhesive composition is, in view of securing the good viscosity thereof, preferably 10% by mass or more, more preferably 15% by mass or more, even more preferably 20% by mass or more, and, preferably 50% by mass or less, more preferably 40% by mass or less, even more preferably 35% by mass or less.

The first water-dispersed pressure-sensitive adhesive composition is preferably filtered before the applying step in view of the reduction in defects of the double-sided pressure-sensitive adhesive sheet X.

In the first drying step, as illustrated in FIG. 1B, the coating film 20a on the release liner 11 is dried by heating to form a pressure-sensitive adhesive layer 21, i.e., a first pressure-sensitive adhesive layer. The drying temperature is, in view of the efficiencies in drying, preferably 25°C or more, more preferably 60°C or more, even more preferably 80°C or more. The drying temperature is, in view of the suppression of the deformation (expansion or contraction) of the release liner 11, preferably 140°C or less, more preferably 130°C or less, even more preferably 120°C or less. The drying time is, depending on the drying temperature, for example, 1 to 10 minute(s).

The pressure-sensitive adhesive layer 21 has a thickness of preferably 8 µm or more, more preferably 10 µm or more, even more preferably 12 µm or more in view of securing the good adhesion thereof. The thickness of the pressure-sensitive adhesive layer 21 is preferably 30 µm or less, more preferably 25 µm or less, even more preferably 20 µm or less in view of thinning the double-sided pressure-sensitive adhesive sheet Y.

In the bonding step, as illustrated in FIG. 1C, a substrate film 30 is bonded to the pressure-sensitive adhesive layer 21 on the release liner 11. The substrate film 30 has a first surface 31 and a second surface 32 opposite the first surface 31. In this step, the first surface 31 of the substrate film 30 is bonded to an exposed surface of the pressure-sensitive adhesive layer 21 on the release liner 11. For the bonding, for example, a laminator is used. By this step, a laminate film X' is produced as an intermediate product.

The substrate film 30 is, for example, a transparent resin film with flexibility. Examples of the material of the substrate film 30 include polyester resin, polyolefin resin, polycarbonate resin, polyether sulfone resin, polyacrylate resin, melamine resin, polyamide resin, polyimide resin, cellulose resin, and polystyrene resin. Examples of the polyester resin include polyethylene terephthalate (PET), polybutylene telephthalate, and polyethylene naphthalate. Examples of the polyolefin resin include polyethylene, polypropylene, and cycloolefin polymer (COP). As the material of the substrate film 30, in view of transparency and strength, preferably polyester resin, more preferably PET is used.

The first surface 31 of the substrate film 30 may be subjected to surface modification treatment in order to secure the adhesiveness of the pressure-sensitive adhesive layer 21 to the substrate film 30. Further, the second surface 32 of the substrate film 30 may be subjected to surface modification treatment in order to secure the adhesiveness of a pressure-sensitive adhesive layer 22 described below to the substrate film 30. Examples of the surface modification treatment include corona treatment, plasma treatment, ozone treatment, primer treatment, and glow treatment.

The first surface 31 of the substrate film 30 may be formed of an anchoring layer that enhances the anchoring property of the pressure-sensitive adhesive layer 21 to the substrate film 30 to ensure adhesion of the pressure-sensitive adhesive layer 21 to the substrate film 30. The second surface 32 of the substrate film 30 may be formed of an anchoring layer that enhances the anchoring property of the pressure-sensitive adhesive layer 22 to the substrate film 30 to ensure adhesion of the pressure-sensitive adhesive layer 22 to the substrate film 30. Examples of the material for forming the anchoring layer include polyurethane-based resin, polyester-based resin, acrylic resin, and polyester polyurethane resin. Examples of the anchoring layer include a layer formed on the surface of the above-described resin film by inline treatment at the time of the formation of the film, and a layer formed on the surface of the resin film after the formation of the film. The anchoring layer has a thickness of, for example, 0.01 µm or more, and, for example, 2.0 µm or less.

The substrate film 30 has a thickness of preferably 1 µm or more, more preferably 2 µm or more, even more preferably 3 µm or more, particularly preferably 4 µm or more in view of ensuring the handling property of the double-sided pressure-sensitive adhesive sheet X. The thickness of the substrate film 30 is, in view of thinning the double-sided pressure-sensitive adhesive sheet Y described below, preferably 12 µm or less, more preferably 10 µm or less, even more preferably 8 µm or less, particularly preferably 5 µm or less.

In the second applying step, as illustrated in FIG. 1D, a coating film 20b is formed on the substrate film 30 in the laminate film X'. Specifically, a second water-dispersed pressure-sensitive adhesive composition is applied onto the second surface 32 of the substrate film 30 using a coater to form the coating film 20b, i.e., a coating film applied to the substrate film 30. The second water-dispersed pressure-sensitive adhesive composition is an aqueous emulsion containing a water-dispersible polymer and water. The components contained in the second water-dispersed pressure-sensitive adhesive composition and the amounts of the contained components are the same as those of the first water-dispersed pressure-sensitive adhesive composition. The composition of the second water-dispersed pressure-sensitive adhesive composition may be the same as or different from that of the first water-dispersed pressure-sensitive adhesive composition. In view of securing the same qualities and properties of the pressure-sensitive adhesive layers 21 and 22, the composition of the second water-dispersed pressure-sensitive adhesive composition and that of the first water-dispersed pressure-sensitive adhesive composition are preferably the same. The pressure-sensitive adhesive layers 21 and 22 having the same qualities and properties are preferable for efficiently processing and using the double-sided pressure-sensitive adhesive sheet Y and the double-sided pressure-sensitive adhesive sheet X without distinguishing them as the front and back.

In the second drying step, as illustrated in FIG. 1E, the coating film 20b on the substrate film 30 is dried by heating to form a pressure-sensitive adhesive layer 22, i.e., a second pressure-sensitive adhesive layer. The drying temperature is, in view of the efficiencies in drying, preferably 25°C or more, more preferably 60°C or more, even more preferably 80°C or more. The drying temperature is, in view of the suppression of the deformation (expansion or contraction) of the release liner 11 and the substrate film 30, preferably 140°C or less, more preferably 130°C or less, even more preferably 120°C or less. The drying temperature of the second drying step is preferably the same as that of the first drying step. The drying time is, depending on the drying temperature, for example, 1 to 10 minutes. The drying time of the second drying step is preferably the same as that of the first drying step.

The pressure-sensitive adhesive layer 22 has a thickness of preferably 8 µm or more, more preferably 10 µm or more, even more preferably 12 µm or more in view of securing the good adhesion thereof. The thickness of the pressure-sensitive adhesive layer 22 is, in view of thinning the double-sided pressure-sensitive adhesive sheet Y, preferably 30 µm or less, more preferably 25 µm or less, even more preferably 20 µm or less. The pressure-sensitive adhesive layers 21 and 22 may have the same thickness or different ones from each other. The pressure-sensitive adhesive layers 21 and 22 preferably have the same thickness in view of securing the same qualities and properties of the pressure-sensitive adhesive layers 21 and 22.

The double-sided pressure-sensitive adhesive sheet X is produced as described above.

The double-sided pressure-sensitive adhesive sheet X is a double-sided pressure-sensitive adhesive sheet with a release liner on one side, and has a sheet shape with a predetermined thickness. The double-sided pressure-sensitive adhesive sheet X extends in a surface direction, i.e., a direction orthogonal to a thickness direction H. The double-sided pressure-sensitive adhesive sheet X includes the release liner 11, the pressure-sensitive adhesive layer 21, the substrate film 30, and the pressure-sensitive adhesive layer 22 in this order in the thickness direction H. The substrate film 30 and the pressure-sensitive adhesive layers 21 and 22 form the double-sided pressure-sensitive adhesive sheet Y. As described above, the substrate film 30 has the first surface 31 and the second surface 32 opposite the first surface 31 and preferably has a thickness of 12 µm or less. The substrate film 30 having a thickness of 12 µm or less is preferable in view of thinning the double-sided pressure-sensitive adhesive sheet X. The pressure-sensitive adhesive layer 21 is disposed on the first surface 31 of the substrate film 30 and has an adhesive surface 21a opposite the substrate film 30. The pressure-sensitive adhesive layer 21 is formed from the first water-dispersed pressure-sensitive adhesive composition. The release liner 11 is in releasable contact with the adhesive surface 21a. The pressure-sensitive adhesive layer 22 is disposed on the second surface 32 of the substrate film 30 and has an adhesive surface 22a opposite the substrate film 30. The pressure-sensitive adhesive layer 22 is formed from the second water-dispersed pressure-sensitive adhesive composition. Specifically, the pressure-sensitive adhesive layer 22 is formed from a coating film of the second water-dispersed pressure-sensitive adhesive composition applied to the substrate film 30. This helps to reduce the plastic waste caused by the production and use of the double-sided pressure-sensitive adhesive sheet X and thus reduce the environmental load.

The double-sided pressure-sensitive adhesive sheet Y is, for example, a pressure-sensitive adhesive sheet disposed at a place where the light passes in the display panel. Examples of the display panel include the display panels of mobile devices and of wearable devices. Such a display panel has, for example, a multilayer structure including elements, such as a pixel panel, a polarizing film, a touch panel, and a cover glass. The double-sided pressure-sensitive adhesive sheet Y is used, for example, for connecting the elements included in the multilayer structure in the process of producing the display panel. The release liner 11 is removed from the double-sided pressure-sensitive adhesive sheet Y when the double-sided pressure-sensitive adhesive sheet Y is used.

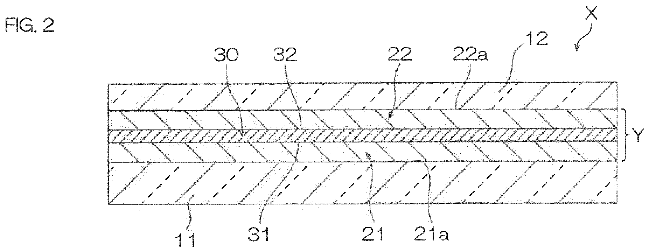

The double-sided pressure-sensitive adhesive sheet X, as illustrated in FIG. 2, may further include a release liner 12 that covers the adhesive surface 22a of the pressure-sensitive adhesive layer 22. Such a double-sided pressure-sensitive adhesive sheet X is a double-sided pressure-sensitive adhesive sheet with release liners on both sides. The double-sided pressure-sensitive adhesive sheet X illustrated in FIG. 2 may be produced by bonding the release liner 12 to the adhesive surface 22a of the pressure-sensitive adhesive layer 22 after the second drying step described above with FIG. 1E. The double-sided pressure-sensitive adhesive sheet X is preferably a double-sided pressure-sensitive adhesive sheet with a release liner on one side in view of the reduction in the plastic waste caused by the production and use of the double-sided pressure-sensitive adhesive sheet.

The release liner 12 is an element that covers and protects the pressure-sensitive adhesive sheet. The release liner 12 is, for example, a plastic film with flexibility. Examples of the plastic film include polyester films, such as a polyethylene terephthalate film, polyethylene films, and polypropylene films. The surface of the pressure-sensitive adhesive layer 22 side of the release liner 12 is preferably subjected to release treatment. Examples of the release treatment include silicone release treatment and fluorine release treatment.

The release liner 12 is thinner than the release liner 11. The release liner 12 has a thickness T2 of preferably 25 µm or less, more preferably 20 µm or less, even more preferably 18 µm or less in view of the reduction in the plastic waste caused by the production and use of the double-sided pressure-sensitive adhesive sheet. The thickness T2 of the release liner 12 is preferably 10 µm or more, more preferably 12 µm or more in view of securing the protective function of the release liner 12.

The total thickness (T1 + T2) of the release liners 11 and 12 is preferably 75 µm or less, more preferably 70 µm or less, even more preferably 65 µm or less in view of the reduction in the plastic waste caused by the production and use of the double-sided pressure-sensitive adhesive sheet. The total thickness (T1 + T2) is preferably 45 µm or more, more preferably 47 µm or more in view of securing the protective function of the release liner.

In the second applying step (FIG. 1D) in the method of producing the double-sided pressure-sensitive adhesive sheet, the substrate film 30 is reinforced in effect by the release liner 11 and pressure-sensitive adhesive layer 21 disposed on the first surface 31 side. In the second applying step, the second water-dispersed pressure-sensitive adhesive composition is applied onto the second surface 32 of the substrate film 30 using a coater. Such a production method is suitable for using a thin substrate film 30.

Further, the present production method of the double-sided pressure-sensitive adhesive sheet allows for the production of a double-sided pressure-sensitive adhesive sheet that does not include a release liner covering the pressure-sensitive adhesive layer 22, i.e., a double-sided pressure-sensitive adhesive sheet X illustrated in FIG. 1E. The present production method alternatively allows for the production of a double-sided pressure-sensitive adhesive sheet in which the pressure-sensitive adhesive layer 22 is covered by a thin release liner 12 that is torn, warped, or creased in the applying step using a coater, i.e., a double-sided pressure-sensitive adhesive sheet X illustrated in FIG. 2. Such a production method is suitable for reducing the plastic waste caused by the production and use of the double-sided pressure-sensitive adhesive sheet.

Furthermore, the production method of the double-sided pressure-sensitive adhesive sheet uses a water-dispersed pressure-sensitive adhesive composition as the material for forming the pressure-sensitive adhesive layers 21 and 22. Such a production method is more suitable for reducing environmental load than the above-described conventional method using a pressure-sensitive adhesive composition containing an organic solvent.

Furthermore, substantially no organic solvent remains in the pressure-sensitive adhesive layer 21 formed from the water-dispersed pressure-sensitive adhesive composition. Thus, in the pressure-sensitive adhesive layer 21 heated together with the coating film 20b in the second drying step (FIG. 1E), the occurrence of a defect caused by the vaporization of the remaining organic solvent is prevented or suppressed. Even in a case in which a small amount of water remains in the pressure-sensitive adhesive layer 21, rapid vaporization of the water is less likely to occur than that of the organic solvent, and thus the occurrence of the defect is prevented or suppressed. The prevention or suppression of the defect of the pressure-sensitive adhesive layer 21 is suitable for ensuring a good appearance of the double-sided pressure-sensitive adhesive sheet X.

Thus, the present production method is suitable for producing a thin double-sided pressure-sensitive adhesive sheet with a good appearance while reducing the environmental load.

Further, the above-described double-sided pressure-sensitive adhesive sheet X may be produced by such a production method. Thus, the double-sided pressure-sensitive adhesive sheet X is suitable for being produced as a thin double-sided pressure-sensitive adhesive sheet with a good appearance while reducing the environmental load.

### Examples

Next, the present invention is specified below with reference to Examples. The present invention is however not limited by these Examples. The specific numerical values of the mixing ratios (content ratios), property values, and parameters used in the following description can be replaced with the upper limit values (numerical values defined as "or less" or "below") or lower limit values (numerical values defined as "or more" or "above") of the corresponding numerical values of the mixing ratios (content ratios), property values, and parameters described above.

### [Example 1]

### <Preparation of Water-dispersed Pressure-sensitive Adhesive Composition>

In a vessel, a mixture containing 30 parts by mass of distilled water, 85 parts by mass of 2-ethylhexyl acrylate, 13 parts by mass of methyl acrylate, 1.25 parts by mass of acrylic acid, 0.75 parts by mass of methacrylic acid, 0.035 parts by mass of t-dodecanethiol as a chain transfer agent, 1.88 parts by mass of a reactive emulsifier (product name "AQUARON KH-1025", ammonium-α-sulfonate-ω-1-(allyloxymethyl)alkyloxypolyoxyethylene, manufactured by DKS Co., Ltd.), and 0.02 parts by mass of a silane coupling agent (product name "KBM-503", 3-methacryloxypropyltrimethoxysilane, manufactured by Shin-Etsu Chemical Co., Ltd) was stirred with a homo mixer, thereby preparing a monomer emulsion.

Meanwhile, in a reaction vessel equipped with a reflux condenser tube, a nitrogen introduction tube, a thermometer, and a stirrer, a mixture containing 73 parts by mass of ion-exchanged water and 0.07 parts by mass of a reactive emulsifier (AQUARON KH-1025) was stirred in a nitrogen atmosphere at 60°C for one hour. Next, 0.1 parts by mass of 2,2'-azobis{2-[N-(2-carboxyethyl)amidino]propane} 4 hydrate (product name "VA-057" manufactured by FUJIFILM Wako Pure Chemical Corporation) as a polymerization initiator was added to the stirred mixture. Thereafter, while the mixture was kept at 60°C, the prepared monomer emulsion was added dropwise thereto over four hours to develop the emulsion polymerization reaction. Next, the reaction solution was held at 60°C for three hours (aging). Next, the aged solution was cooled to room temperature. Thereafter, the pH of the solution was adjusted to 6.0 by adding a 10% by mass ammonia aqueous solution. As described above, an acrylic polymer emulsion containing a water-dispersible acrylic polymer as the water-dispersible polymer was prepared.

To the acrylic polymer emulsion, per 100 parts by mass of the water-dispersible acrylic polymer, 1.00 part by mass, based on dried solid, of a carboxylic acid copolymer thickener (product name "ARON B-500" manufactured by TOAGOSEI CO., LTD.), 3.15 parts by mass, based on dried solid, of a polyacrylate-based thickener (product name "ARON A-10H", polyacrylate having a weight average molecular weight of 200000, manufactured by TOAGOSEI CO., LTD.), 35 parts by mass, based on dried solid, of a tackifier (product name "TAMANOL E-200NT", terpene-based resin, manufactured by ARAKAWA CHEMICAL INDUSTRIES, LTD.), and 0.89 parts by mass, based on dried solid, of a leveling agent (product name "NEOCOL SW-C" sodium dialkylsulfosuccinate manufactured by DKS Co., Ltd.) were added and mixed. Next, by adding ion-exchanged water, the solid content concentration of the mixture was adjusted to 25.5% by mass. Thereafter, by adding a 10% by mass ammonia aqueous solution, the pH of the mixture was adjusted to 9.0. As described above, a water-dispersed pressure-sensitive adhesive composition C1 having a solid content concentration of 25.5% by mass was prepared.

### <Production of Double-sided Pressure-sensitive Adhesive Sheet>

The water-dispersed pressure-sensitive adhesive composition C1 was applied onto the release liner L1 as the first release liner with a coater, thereby forming a coating film (the first applying step). The release liner L1 was a polyethylene terephthalate (PET) film subjected to silicone release treatment (product name "DIAFOIL MRF # 38" having a thickness of 38 µm, manufactured by Mitsubishi Chemical Holdings Corporation). In this step, the water-dispersed pressure-sensitive adhesive composition C1 was applied to the release-treated surface of the release liner L1. In this step, a single-sided coater of the die coater type was used (the same applies to the applying step described below).

Next, the coating film on the release liner L1 was dried in an oven for two minutes, thereby forming a pressure-sensitive adhesive layer with a thickness of 13 µm, i.e., the first pressure-sensitive adhesive layer (the first drying step). The drying temperature was 120°C (the same applies to the drying step described below).

Next, a substrate film with a thickness of 4 µm (product name "K330E4.5W", a PET film, manufactured by Mitsubishi Chemical Holdings Corporation) was bonded onto the pressure-sensitive adhesive layer on the release liner L1 (the bonding step). In this manner, a laminate film of the release liner L1, the first pressure-sensitive adhesive layer, and the substrate film was produced as an intermediate product.

Next, the water-dispersed pressure-sensitive adhesive composition C1 was applied onto the substrate film on the laminate film, thereby forming a coating film (the second applying step).

Next, the coating film on the substrate film was dried in an oven for two minutes, thereby forming a pressure-sensitive adhesive layer with a thickness of 13 µm, i.e., the second pressure-sensitive adhesive layer (the second drying step).

As described above, the double-sided pressure-sensitive adhesive sheet of Example 1 was produced. The double-sided pressure-sensitive adhesive sheet of Example 1 was a double-sided pressure-sensitive adhesive sheet with a release liner on one side, and included a release liner L1, i.e. the first release liner, with a thickness of 38 µm, a first pressure-sensitive adhesive layer with a thickness of 13 µm formed from the water-dispersed pressure-sensitive adhesive composition C1, a substrate film with a thickness of 4 µm, and a second pressure-sensitive adhesive layer with a thickness of 13 µm formed from the water-dispersed pressure-sensitive adhesive composition C1 in this order in the thickness direction. The total thickness of the first pressure-sensitive adhesive layer, the substrate film, and the second pressure-sensitive adhesive layer was 30 µm.

### [Example 2]

The double-sided pressure-sensitive adhesive sheet of Example 2 was produced in the same manner as the double-sided pressure-sensitive adhesive sheet of Example 1 except that a step of bonding a release liner L2 as the second release liner to the second pressure-sensitive adhesive layer was further carried out. The release liner L2 was a PET film subjected to silicone release treatment (product name "DIAFOIL MRF #25" with a thickness of 25 µm manufactured by Mitsubishi Chemical Holdings Corporation). In this step, the release-treated surface of the release liner L2 was bonded to an exposed surface, i.e. an adhesive surface, of the second pressure-sensitive adhesive layer.

The double-sided pressure-sensitive adhesive sheet of Example 2 was a double-sided pressure-sensitive adhesive sheet with release liners on both sides, and included a release liner L1, i.e. the first release liner, with a thickness of 38 µm, a first pressure-sensitive adhesive layer with a thickness of 13 µm formed from the water-dispersed pressure-sensitive adhesive composition C1, a substrate film with a thickness of 4 µm, a second pressure-sensitive adhesive layer with a thickness of 13 µm formed from the water-dispersed pressure-sensitive adhesive composition C1, and a release liner L2, i.e. the second release liner, with a thickness of 25 µm in this order in the thickness direction.

### [Comparative Example 1]

### <Preparation of Pressure-sensitive Adhesive Composition>

First, in a reaction vessel equipped with a reflux condenser tube, a nitrogen introduction tube, a thermometer, and a stirrer, a mixture containing 70 parts by mass of n-butyl acrylate (BA), 30 parts by mass of 2-ethylhexyl acrylate (2EHA), 3 parts by mass of acrylic acid, 0.05 parts by mass of 4-hydroxybutyl acrylate (4HBA), 0.2 parts by mass of 2,2'-azobisisobutyronitrile (AIBN) as a thermal polymerization initiator, and toluene as a solvent was stirred under a nitrogen atmosphere at 60°C for six hours (polymerization reaction). By that, a polymer solution containing an acrylic base polymer was produced. The acrylic base polymer in the polymer solution had a weight average molecular weight of about 550000.

Next, to the polymer solution, per 100 parts by mass of the acrylic base polymer, 30 parts by mass of a tackifier (product name "Pensel D- 125", polymerized rosin ester resin, manufactured by ARAKAWA CHEMICAL INDUSTRIES, LTD.), and 3 parts by mass of a cross-linking agent (product name "Coronate L", a trimethylol propane adduct of tolylene diisocyanate, manufactured by Tosoh) were added and mixed, thereby preparing a pressure-sensitive adhesive composition C2.

### <Preparation of Double-sided Pressure-sensitive Adhesive Sheet>

The pressure-sensitive adhesive composition C2 was applied to the release-treated surface of the release liner L1 as the first release liner (DIAFOIL MRF #38), thereby forming a coating film. Next, the coating film on the release liner L1 was dried in an oven for two minutes, thereby forming a pressure-sensitive adhesive layer, i.e. the first pressure-sensitive adhesive layer, with a thickness of 13 µm.

Meanwhile, the pressure-sensitive adhesive composition C2 was applied onto a release liner L3 as the second release liner, thereby forming a coating film. The release liner L3 is a PET film subjected to silicone release treatment (product name "DIAFOIL MRF #38", a thickness of 38 µm, manufactured by Mitsubishi Chemical Holdings Corporation). In this step, the pressure-sensitive adhesive composition C2 was applied to the release-treated surface of the release liner L3, thereby forming a coating film. Next, the coating film on the release liner L3 was dried in an oven for two minutes, thereby forming a pressure-sensitive adhesive layer, i.e. the second pressure-sensitive adhesive layer, with a thickness of 13 µm.

Next, the pressure-sensitive adhesive layer on the release liner L1 was bonded to the one-side surface of a substrate film (product name "K330E4.5W", a PET film, manufactured by Mitsubishi Chemical Holdings Corporation) with a thickness of 4 µm (the first transfer step). Next, the pressure-sensitive adhesive layer on the release liner L3 is bonded onto the other-side surface of the substrate film (the second transfer step).

As described above, the double-sided pressure-sensitive adhesive sheet of Comparative Example 1 was produced. The double-sided pressure-sensitive adhesive sheet of Comparative Example I was a double-sided pressure-sensitive adhesive sheet with release liners on both sides, and included a release liner L1, i.e. the first release liner, with a thickness of 38 µm, a first pressure-sensitive adhesive layer with a thickness of 13 µm formed from the pressure-sensitive adhesive composition C2, a substrate film with a thickness of 4 µm, a second pressure-sensitive adhesive layer with a thickness of 13 µm formed from the pressure-sensitive adhesive composition C2, and a release liner L3, i.e. the second release liner, with a thickness of 38 µm in this order in the thickness direction.

### [Comparative Example 2]

The double-sided pressure-sensitive adhesive sheet of Comparative Example 2 was produced in the same manner as the double-sided pressure-sensitive adhesive sheet of Example 1 except that the pressure-sensitive adhesive composition C2 was used instead of the water-dispersed pressure-sensitive adhesive composition C1. The double-sided pressure-sensitive adhesive sheet of Comparative Example 2 was a double-sided pressure-sensitive adhesive sheet with release liner on one side, and included a release liner L1, i.e. the first release liner, with a thickness of 38 µm, a first pressure-sensitive adhesive layer with a thickness of 13 µm formed from the pressure-sensitive adhesive composition C2, a substrate film with a thickness of 4 µm, and a second pressure-sensitive adhesive layer with a thickness of 13 µm formed from the pressure-sensitive adhesive composition C2 in this order in the thickness direction.

### [Comparative Example 3]

The first applying step, which is described above with regard to Example 1, was carried out using a thin release liner L2 (DIAFOIL MRF #25 with a thickness of 25 µm) instead of the release liner L1 with a thickness of 38 µm. Specifically, the water-dispersed pressure-sensitive adhesive composition C1 was applied onto the release-treated surface of the release liner L2 with the coater, thereby forming a coating film. However, the release liner L2 was warped, creased and torn during passing through the coater. Accordingly, the process of producing the double-sided pressure-sensitive adhesive sheet with a release liner was not appropriately continued.

### <Evaluation of Appearance>

The appearance of each of the double-sided pressure-sensitive adhesive sheets of Examples 1 and 2 and Comparative Examples 1 and 2 (the double-sided pressure-sensitive adhesive sheets with a release liner on one side or the double-sided pressure-sensitive adhesive sheets with release liners on both sides) was evaluated as follows.

First, a sample sheet of 1 m² in area was cut out of the double-sided pressure-sensitive adhesive sheet. Next, the sample sheet was visually observed to check the presence or absence of defects and the number of defects (foreign material or discoloration). Then, the appearance of the double-sided pressure-sensitive adhesive sheet was evaluated as "good" when a defect with a maximum length of 2 mm or more was not observed, and as "bad" when a defect with a maximum length of 2 mm or more was observed. The results are shown in Table 1. The number of the defects with a maximum length of 2 mm or more is also shown in Table 1. It was confirmed that there were defects between the first pressure-sensitive adhesive layer and the first release liner in the double-sided pressure-sensitive adhesive sheet of Comparative Example 2. The defects were caused by the vaporization of the organic solvent remaining in the first pressure-sensitive adhesive layer in the second drying step of the process of producing the double-sided pressure-sensitive adhesive sheet of Comparative Example 2.

**Table 1**

| | Example 1 | Example 2 | Comp. Example 1 | Comp. Example 2 |
|---|---|---|---|---|
| Thickness of Second Release Liner (µm) | - | 25 | 38 | - |
| Thickness of Second Pressure-sensitive Adhesive Layer (µm) | 13 (C1) | 13 (C1) | 13 (C2) | 13 (C2) |
| Thickness of Substrate Film (µm) | 4 | 4 | 4 | 4 |
| Thickness of First Pressure-sensitive Adhesive Layer (µm) | 13 (C1) | 13 (C1) | 13 (C2) | 13 (C2) |
| Thickness of First Release Liner (µm) | 38 | 38 | 38 | 38 |
| Total Thickness except for Release Liner (µm) | 30 | 30 | 30 | 30 |
| Total Thickness of Release Liner(s) (µm) | 38 | 63 | 76 | 38 |
| Evaluation of Appearance (The Number of Defects of 2 mm or more) | Good (0) | Good (0) | Good (0) | Bad (5) |

### [Evaluation]

The double-sided pressure-sensitive adhesive sheets of Examples 1 and 2, and Comparative Examples 1 and 2 (the double-sided pressure-sensitive adhesive sheets with a release liner on one side or the double-sided pressure-sensitive adhesive sheets with release liners on both sides) each had a thin substrate film, 4 µm in thickness, and had the same total thickness (30 µm) of the first pressure-sensitive adhesive layer, substrate film, and second pressure-sensitive adhesive layer. As compared with the total thickness (76 µm) of the release liners of the double-sided pressure-sensitive adhesive sheet of Comparative Example 1, the total thickness (38 µm) of the release liner of Example 1 and the total thickness (63 µm) of the release liners of Example 2 are each small. That is, each of the double-sided pressure-sensitive adhesive sheets of Examples 1 and 2 is more suitable for reducing the plastic waste caused by the production and use of the double-sided pressure-sensitive adhesive sheet than the double-sided pressure-sensitive adhesive sheet of Comparative Example 1. Further, the double-sided pressure-sensitive adhesive sheet of Comparative Example 2, which had the first pressure-sensitive adhesive layer formed from the pressure-sensitive adhesive composition C2, was not good in appearance. On the other hand, the double-sided pressure-sensitive adhesive sheets of Examples 1 and 2, each of which had the first pressure-sensitive adhesive layer formed from the water-dispersed pressure-sensitive adhesive composition Cl, were good in appearance. Furthermore, when a release liner L2 with a thickness of 25 µm was used as the first release liner, namely, in Comparative Example 3, the process of producing the double-sided pressure-sensitive adhesive sheet with a release liner was not appropriately continued.

### Description of Reference Numerals

- X: double-sided pressure-sensitive adhesive sheet
- 11, 12: release liner
- 21: pressure-sensitive adhesive layer (first pressure-sensitive adhesive layer)
- 21a: adhesive surface (first adhesive surface)
- 22: pressure-sensitive adhesive layer (second pressure-sensitive adhesive layer)
- 22a: adhesive surface (second adhesive surface)
- 30: substrate film
- 31: first surface
- 32: second surface

## Claims

1. A method of producing a double-sided pressure-sensitive adhesive sheet, the method comprising:
a first applying step of applying a first water-dispersed pressure-sensitive adhesive composition to a release liner to form a first coating film;
a first drying step of drying the first coating film by heating to form a first pressure-sensitive adhesive layer;
a bonding step of bonding a first surface of a substrate film to an exposed surface of the first pressure-sensitive adhesive layer on the release liner, the substrate film having the first surface and a second surface opposite the first surface;
a second applying step of applying a second water-dispersed pressure-sensitive adhesive composition to the second surface of the substrate film to form a second coating film; and
a second drying step of drying the second coating film by heating to form a second pressure-sensitive adhesive layer.

2. The method according to claim 1, further comprising a step of bonding a release liner to an exposed surface of the second pressure-sensitive adhesive layer on the substrate film.

3. A double-sided pressure-sensitive adhesive sheet comprising:
a substrate film having a first surface and a second surface opposite the first surface, the substrate film having a thickness of 12 µm or less;
a first pressure-sensitive adhesive layer disposed on the first surface, having a first adhesive surface opposite the substrate film, and formed from a first water-dispersed pressure-sensitive adhesive composition;
a second pressure-sensitive adhesive layer disposed on the second surface, having a second adhesive surface opposite the substrate film, and formed from a second water-dispersed pressure-sensitive adhesive composition; and
a release liner in releasable contact with the first adhesive surface.

4. The double-sided pressure-sensitive adhesive sheet according to claim 3, wherein the second pressure-sensitive adhesive layer is formed from a coating film of the second water-dispersed pressure-sensitive adhesive composition applied to the substrate film.

5. The double-sided pressure-sensitive adhesive sheet according to claim 3 or 4, wherein the release liner has a thickness of 35 µm or more.

6. The double-sided pressure-sensitive adhesive sheet according to any one of claims 3 to 5, further comprising a release liner in releasable contact with the second adhesive surface, the release liner having a thickness of 25 µm or less.

7. The double-sided pressure-sensitive adhesive sheet according to any one of claims 3 to 6, wherein the substrate film includes an anchoring layer forming the first surface and/or an anchoring layer forming the second surface.
